# EUROPEAN PATENT APPLICATION

(11) **EP 2 130 623 A1**
(43) Date of publication of application: **09.12.2009**
(21) Application number: 08447029.3
(22) Date of filing: 06.06.2008
(51) Int. Cl.: B21B 45/02, G01B 11/06

(54) **A method and apparatus for measuring a quantity of oil on a metal surface**

(71) Applicant: CENTRE DE RECHERCHES METALLURGIQUES asbl - CENTRUM VOOR RESEARCH IN DE METALLURGIE vzw, B-1200 BRUXELLES (BE)
(72) Inventor: Vervaet, Bart, 9000 Gent (BE)
(74) Representative: Lerho, Marc J. A.

(57) **Abstract**

The invention is related to a method and apparatus as disclosed in the appended claims. The method comprises the step of spraying an emulsion of e.g. lubrication oil on a metal surface. The measurement is based on an image taken of at least a portion of said surface or of a surface which has entered into contact with said surface (e.g. a roll), said image being taken while the portion of surface is illuminated, for example by UV-light. The intensity of a plurality of points (e.g. pixels) in the image gives a view of the distribution of oil on the surface, and can be translated to a numerical value of the quantity of oil on the surface. According to the preferred embodiment, a fluorescent dye is added to the oil before spraying the emulsion on the surface. The invention is equally related to an apparatus suitable for performing the method of the invention.

## Description

### Field of the invention

The present invention is related to the measurement of the quantity (and distribution) of lubrication oil (referred to as plate out) on a metal surface, involved in a cold rolling or hot rolling operation. The metal surface can be the surface of sheets undergoing cold rolling, or the surface of the rolls in cold or hot rolling, or the surface of a metal sample used in a laboratory setup.

### State of the art.

During cold and hot rolling, lubrication of the rolls and the deformed metal sheet is of the highest importance. During rolling, an emulsion comprising an amount of oil is prepared and sprayed onto the sheet or roll surface prior to rolling. A quantity of oil is left on the surface (the so-called 'plate out'). In the laboratory, tests are performed on samples which are moving at a given speed, and upon which an emulsion is sprayed through nozzles. The plate out is a function of the sample speed, temperature, the nozzle type, nozzle distance, angle, and other parameters.

The standard technique to measure the amount of oil on a sample is to weigh the sample before and after spraying and drying. However, this technique suffers from a number of drawbacks, mainly due to the inherent measurement error (10% for a plate out of 20cg/m² on a large plate), and the difficulty of measuring very small amounts of oil. On a plate sample of 100 X 100mm, an amount of oil of 1mg is still significant (it represents 10cg/m²), but such a small amount is difficult to detect by weighing. Due to the measurement error, the accuracy can only be improved through a high number of repeated measurements, which is however time consuming and therefore inefficient. Finally, the weighing method is strictly applicable to laboratory samples, and cannot be applied to do an in-line measurement of plate out values in a cold or hot rolling installation.

### Aims of the invention

The present invention aims to propose an improved measurement technique for detecting and measuring the oil quantity on metal surfaces, involved in rolling operations.

### Summary of the invention

The invention is related to a method and apparatus as disclosed in the appended claims. The method comprises the step of spraying an emulsion of oil, preferably lubrication oil on a metal surface. The measurement is based on an image taken of at least a portion of said surface or of a surface which has entered into contact with said surface (e.g. a roll), said image being taken while the portion of surface is illuminated, for example by UV-light. The intensity of a plurality of points (e.g. pixels) in the image gives a view of the distribution of oil on the surface, and can be translated to a numerical value of the quantity of oil on the surface. According to a preferred embodiment, a fluorescent dye is added to the oil before preparing and spraying the emulsion on the surface. The invention is equally related to an apparatus suitable for performing the method of the invention.

Preferred embodiments are disclosed in combinations of the independent claims with one or more of the claims dependent thereon.

### Brief description of the figures

Figure 1 gives a schematic view of a test apparatus for doing laboratory tests, according to the invention.

Figure 2 shows an example of an image taken with the CCD camera in the apparatus of figure 1.

Figure 3 shows a calibration curve, linking the intensity measured by the method of the invention, to the actual plate out.

### Detailed description of preferred embodiments of the invention

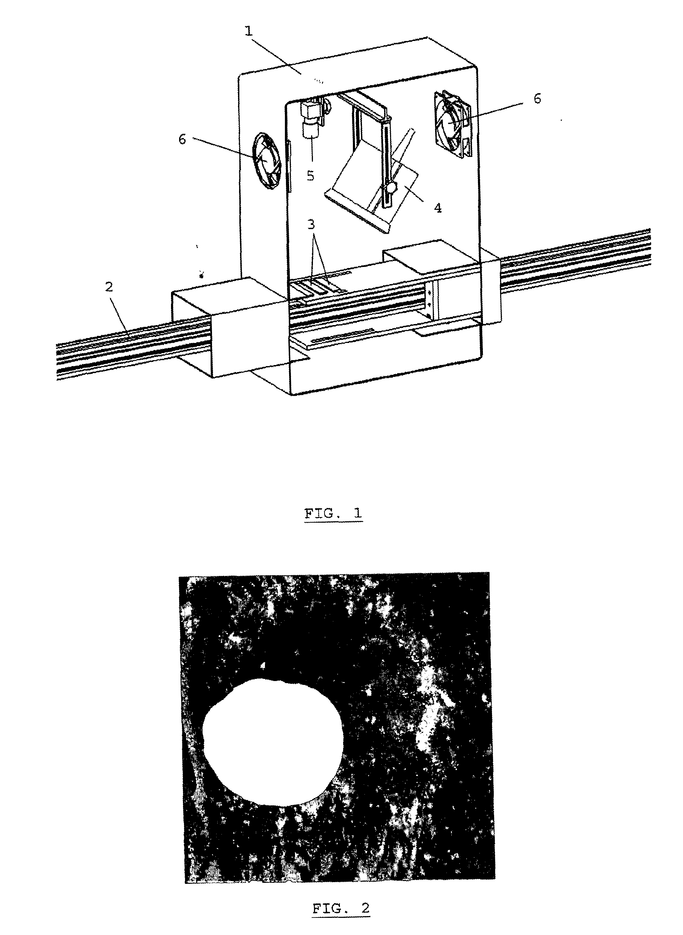

Figure 1 shows an apparatus suitable for performing the method of the invention on a laboratory scale. The apparatus comprises an enclosure 1 which can be closed off so that essentially no incident light enters the enclosure from the surroundings of the apparatus. A transport means 2 is provided, e.g. a movable beam, or transportation belt, arranged to move one or more metal samples 3 from one side of the enclosure to the other at a given speed. Inside the enclosure, a lamp 4 is installed. This is preferably a high power UV-lamp, e.g. 35W (wavelength 365nm) with flood reflector. Alternatively, an excimer lamp may be used. A CCD-camera 5 is arranged so as to be able to take images from the illuminated samples. The CCD camera is preferably equipped with a yellow and green filter, to improve the contrast of the obtained image. Fans 6 are provided in the walls of the enclosure to regulate temperature and humidity inside the enclosure. The apparatus is further equipped with analysis means (not shown) for receiving and analysing the image taken by the CCD camera. These analysis means basically comprise a computer equipped with suitable image analysis software. Software which is known in the art may be used for this purpose. The analysis means is arranged to at least provide an image of the illuminated portion on a computer screen, which allows an immediate view of the oil distribution on the sample. The higher the intensity of the reflected light, the higher the quantity of oil on that location. In this way, the oil distribution can be efficiently compared between samples based on a visual inspection. The analysis means preferably allows to obtain a numerical account of the obtained image (e.g. intensity as a percentage of maximum intensity in a plurality of points (pixels) of the image).

Figure 2 shows an example of an image taken with the setup of figure 1. It concerns a sample with a droplet of pure oil on the surface and a distribution of oil on the remainder of the surface. The droplet shows up on the image as a white spot (i.e. maximum intensity), while the rest of the image comprises grey areas with varying intensity. This illustrates the correlation that exists between the measured intensity and the amount of oil present on the surface.

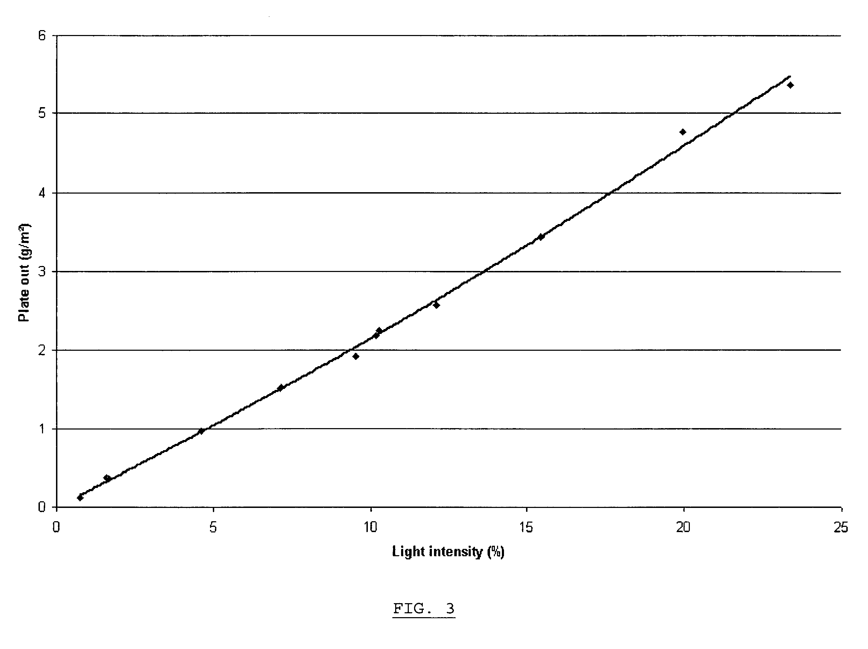

In order to quantify the oil present on a sample on the basis of the images, a correlation needs to be made between the images that are taken (i.e. the numerical intensity values mentioned above), and the actual amount of oil on the sample. For this purpose, a calibration test needs to be performed wherein samples with various known plate-out values (e.g. measured with maximum correctness through repeated and more precise weighing), are illuminated and measured. The measured intensity can then be correlated to an actual oil quantity, as illustrated by the curve in figure 3. The points on the curve indicate the measured samples. The full line indicates the best fitting curve obtained by a suitable fitting technique. This curve can be used to derive plate out values from measurements on other samples.

The invention is equally related to an apparatus suitable for performing an in-line measurement of the oil quantity on metal sheets in a cold-rolling installation, preferably a rolling mill for cold rolling of steel sheets. Such an apparatus requires the same components as shown in figure 1, but the scale of the apparatus would have to be adapted to the scale of the rolling mill. The transport beam or belt 2 is replaced by the moving metal sheet. The enclosure 1 is installed after the spraying nozzles, and before the rolls. In this way the method of the invention is applied on the metal (e.g. steel) surface after applying a lubrication oil emulsion to the surface and before cold rolling. The method may however also be applied to the rolled surface after rolling, and after application on the rolled surface of an anti-corrosion oil (possibly mixed with a fluorescent dye). The latter type of oil may also be detected by the method of the invention, in order to verify that the anti-corrosion oil covers the surface completely.

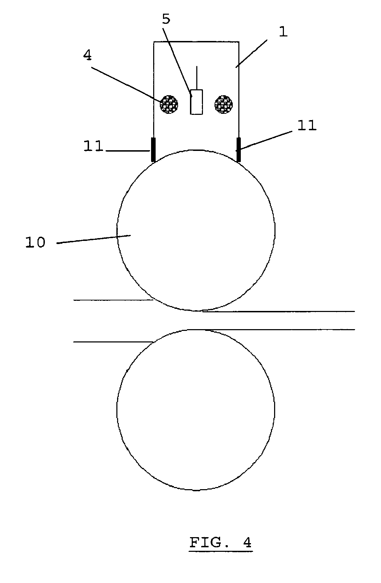

According to another embodiment, the invention is related to an apparatus, arranged to measure the oil present on the surface of the rolls of a cold rolling or hot rolling installation, by applying the method of the invention to a roll surface, after it has entered into contact with the lubricated sheet surface, or after the oil emulsion has been sprayed directly onto the roll surface. A lamp and camera are then installed in proximity to the roll surface. Figure 4 illustrates a possible configuration according to this embodiment, with an apparatus according to the invention being installed in proximity to a roll 10. The enclosure 1 is visible, as are the UV-lamps 4 and CCD camera 5. Wipers 11 are preferably provided between the enclosure 1 and the roll surface, to prevent incoming light from entering the enclosure. The wipers also protect the measuring equipment against dirt and/or water.

The fluorescent dye used in the invention may be a commercially available product, such as a dye from Oil-Glo^{™}. The dye is preferably added in an amount of between 1ml and 5ml for each litre of oil. The emulsion is obtained in a manner known in the art, e.g. by adding 5% oil (+dye) to water. It has been found that the addition of the dye in the quantities as claimed has a negligible effect on the plate out compared to the plate out of oil without addition of the dye. Especially for thick layers of oil, it may be unnecessary to add a fluorescent dye to the oil, and a reliable image may be obtained without addition of such a dye.

## Claims

1. A method for detecting a quantity of oil present on a metal surface, the method comprising the steps of
- preparing an emulsion comprising oil, such as a lubrication oil,
- spraying said emulsion onto a first metal surface,
- illuminating at least a portion of said first surface or of a second surface which has come into contact with said first surface,
- during illumination, taking an image of said portion,
- measuring the intensity of reflected light in a plurality of points of said image,
- deriving from said intensity the distribution of oil present on said portion of surface.

2. The method according to claim 1, wherein said oil is mixed with a fluorescent dye, prior to the step of preparing an emulsion.

3. The method according to claim 2, wherein said fluorescent dye is added to said oil in an amount of between 1ml and 5ml for each litre of oil.

4. The method according to any one of claims 1 to 3, wherein the surface is illuminated by Ultra Violet (UV) light.

5. The method according to any one of claims 1 to 4, further comprising the step of deriving from said intensity the quantity of oil present on said portion of surface.

6. The method according to any one of claims 1 to 5, wherein said first metal surface is the surface of a metal sheet or sample, and wherein at least a portion of said first metal surface is illuminated.

7. The method according to any one of claims 1 to 5, wherein said first metal surface is the surface of a metal sheet and wherein said second surface is the surface of a roll of a cold rolling or hot rolling installation, and wherein a portion of said second metal surface is illuminated.

8. An apparatus for performing the method of any one of claims 1 to 7, said apparatus comprising :
- an enclosure (1),
- at least one lamp (4), installed inside said enclosure,
- a camera means (5), installed inside said enclosure,
- a means for analysing the images captured by said camera means, and for deriving from said images an oil distribution on a surface illuminated by said lamp.

9. The apparatus according to claim 8, further comprising a means (2) for moving said metal object into and out of said enclosure.

10. The apparatus according to claim 8, wherein said enclosure is equipped with wipers (11), so that the enclosure may be installed in proximity to a moving metal surface, such as the surface (10) of a roll in a cold or hot rolling installation.

11. The apparatus according to any one of claims 8 to 10, wherein said lamp is an Ultra Violet (UV) lamp (4) and wherein said camera means is a CCD camera (5).
